# EUROPEAN PATENT SPECIFICATION

(11) **EP 3 175 976 B1**
(45) Date of publication and mention of the grant of the patent: **19.06.2019**
(21) Application number: 16191776.0
(22) Date of filing: 30.09.2016
(51) Int. Cl.: B30B 15/32, B30B 11/08

(54) **MOLDED PRODUCT DISCHARGE DEVICE**
AUSGABEVORRICHTUNG EINES GEFORMTEN PRODUKTS
DISPOSITIF DE DÉCHARGEMENT DE PRODUITS MOULÉS

(30) Priority: 01.12.2015 JP 2015234756; 22.07.2016 JP 2016144485
(43) Date of publication of application: 07.06.2017
(73) Proprietor: Kikusui Seisakusho Ltd., Nakagyo-ku Kyoto-shi Kyoto 604-8483 (JP)
(72) Inventor: SHIMADA, Keiji, Kyoto-shi,, Kyoto 604-8483 (JP); HARADA, Kenji, Kyoto-shi,, Kyoto 604-8483 (JP)
(74) Representative: TBK

(56) References cited:
- EP-A2- 0 458 764
- EP-A2- 2 110 232
- DE-A1-102013 001 451
- GB-A- 1 483 594
- JP-A- 2000 271 794
- JP-A- 2011 156 576

## Description

### Field of the Invention

The invention relates to a molded product discharge device configured to collect a product molded by a rotary compression molding machine.

### Background of the Invention

There has publicly been known a rotary compression molding machine including a die table serving as a turret provided with die bores, an upper punch and a lower punch slidably retained above and below each of the die bores, and configured to horizontally rotate the die table and the punches to compression mold a powdery material filled in the die bores when the paired upper and lower punches pass between an upper roll and a lower roll. The molding machine of this type is applied to produce pharmaceutical tablets, food products, electronic components, and the like.

As disclosed in JP 2011-156576 A, there has been proposed a discharge device configured to discharge molded products one by one, which are molded by a molding machine. Specifically, a rotary member (transfer disc) configured to rotate in synchronization with the die table of the molding machine is provided, at the outer peripheral edge, with a plurality of pockets recessed radially inward and opened radially outward, and molded products pushed out of the die bores in the die table by the pockets are caught to be discharged and transferred along a rotation locus of the pockets.

In a conventional molded product discharge device, a molded product captured by the pocket of the rotary member and conveyed receives centrifugal force and thus tends to jump radially outward from the pocket during conveyance. In order to prevent this phenomenon, it is necessary to provide a guide having an arc shape in a planar view and closing from radially outward the pocket at a position adjacent to the outer peripheral edge of the rotary member. Provision of the guide leads to increase of the number of components and a complicated structure.

JP 2000-271794 A discloses molded product discharge device according to the preamble of claim 1.

DE 10 2013 001451 A and EP 2 110 232 A2 likewise relate to similar molded product discharge device having transfer disks.

### Summary of the Invention

The invention intends to provide a molded product discharge device simply configured with no provision of any guide facing an outer peripheral edge of a rotary member for transfer of a molded product.

The invention provides a molded product discharge device equipped with a rotary compression molding machine that includes a die table provided with a vertically penetrating die bore, and an upper punch and a lower punch vertically slidably retained above and below the die bore, and is configured to horizontally rotate the die table and the punches and mold a molded product by compressing a powdery material filled in the die bore with use of the upper punch and the lower punch, the molded product discharge device including: a rotary member configured to be horizontally rotatable and disposed to be partially overlapped from above with the die table; a pocket bore provided in the rotary member, extending in an axial direction of the rotary member to be larger than an inner diameter of the die bore, and having a radially outside edge closed or narrowed to be opened smaller than an outer diameter of the molded product, for receiving and capturing the molded product pushed upward from the die bore by the lower punch when the pocket bore passes just above the die table; and a support member disposed just below a locus of horizontal rotation of the pocket bore and supporting from below the molded product captured by the pocket bore.

In this configuration, the radially outside edge of the pocket bore inhibits the molded product from jumping radially outward due to centrifugal force. There is thus no need to provide any guide at a position adjacent to the outer peripheral edge of the rotary member.

In a case where the molded product discharge device further includes: a drop port opened, in the support member, to be overlapped with a portion of the pocket bore displaced radially inward from the radially outside edge, and a removal mechanism configured to drop the molded product into the drop port by causing the molded product to be displaced radially inward from radially outside in the pocket bore, only a required molded product is selectively dropped into the drop port to be excluded or extracted for the purpose of removal of a defective product, sampling, or the like.

The removal mechanism is exemplarily configured to blow air into the pocket bore, e.g. from the radially outside towards the radially inside of the rotary member.

In a case where the pocket bore is closed from above, the molded product is reliably prevented from unexpectedly jumping to be ejected from the pocket bore during conveyance.

In a case where the molded product discharge device further includes: a molded product collector opened, at a destination of transfer by the rotary member of the molded product captured by the pocket bore, to be overlapped with a radially outside portion in the pocket bore as a portion not provided with the support member, in which the molded product reaching the destination drops from the pocket bore to the molded product collector, the molded product transferred by the rotary member while being captured by the pocket bore is appropriately collected by the molded product collector.

Furthermore, the molded product discharge device is preferably provided with a dust collecting duct configured to suck dust having entered the pocket bore to remove the dust from the pocket bore. The dust collecting duct appropriately removes a powdery material and other dust remaining in the pocket bore.

The powdery material refers to an aggregate of minute solids and conceptually includes an aggregate of particles such as what is called granules and an aggregate of powder smaller than such particles.

### Effects of the Invention

The invention provides the molded product discharge device simply configured with no provision of any guide facing the outer peripheral edge of the rotary member for transfer of a molded product.

### Brief description of the drawings

Fig. 1 is a sectional side view of a rotary compression molding machine according to an embodiment of the invention;
Fig. 2 is a plan view of a main part of the rotary compression molding machine according to the embodiment;
Fig. 3 is a cylindrical view of the rotary compression molding machine according to the embodiment;
Fig. 4 is a plan view of a molded product discharge device according to the embodiment;
Fig. 5 is a sectional side view of a molded product discharge position where a die table of the molding machine and a rotary member of the molded product discharge device according to the embodiment are overlapped with each other;
Fig. 6 is a sectional side view of a main part, showing a drop port of a support member and a removal mechanism in the molded product discharge device according to the embodiment;
Fig. 7 is a sectional side view of a main part according to a modification example of the invention;
Fig. 8 is a plan view of a molded product discharge device according to a modification example of the invention;
Fig. 9 is a sectional side view of a molded product discharge position where a die table of a molding machine and a rotary member of the molded product discharge device according to the modification example are overlapped with each other;
Fig. 10 is a sectional side view of a main part, showing a drop port of a support member and a removal mechanism in the molded product discharge device according to the modification example;
Fig. 11 is a sectional side view of the molded product discharge position where the die table of the molding machine and the rotary member of the molded product discharge device according to the modification example are overlapped with each other; and
Fig. 12 is a plan view of a molded product discharge device according to a modification example of the invention.

### Description of the preferred embodiment

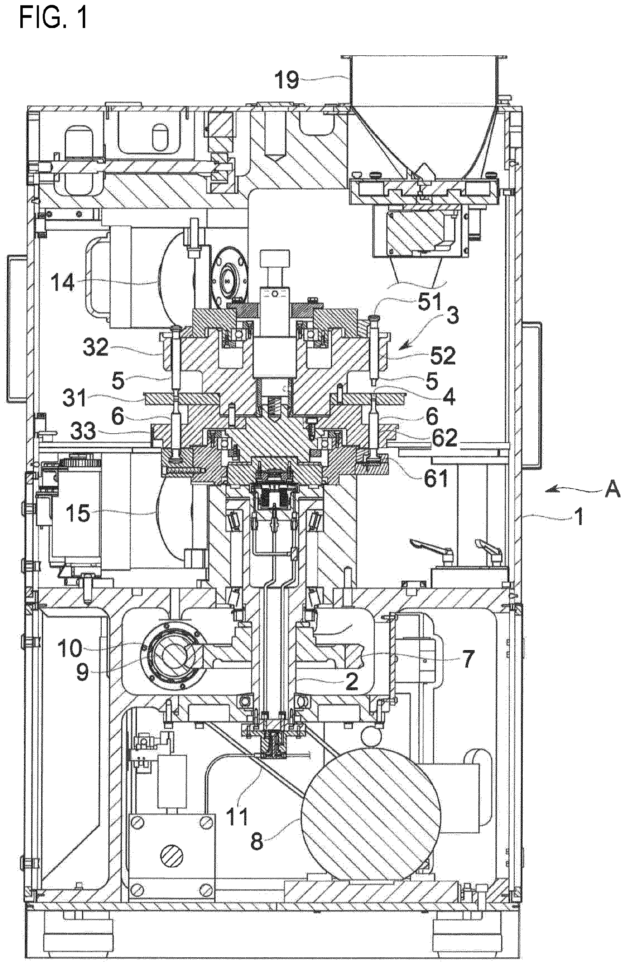

An embodiment of the invention will now be described with reference to the drawings. Initially described is an overview of an entire rotary compression molding machine (hereinafter, referred to as the "molding machine") A according to the embodiment. As shown in Fig. 1, the molding machine A has a frame 1 including an upright shaft 2 functioning as a rotary shaft, and a turret 3 is attached to a connection portion that is disposed at the top of the upright shaft 2.

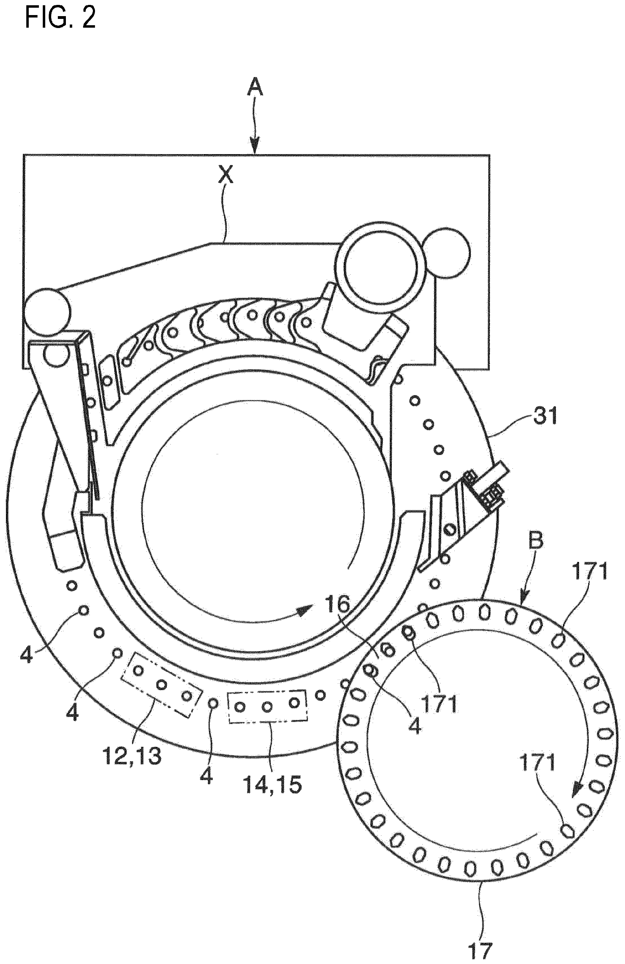

The turret 3 horizontally rotates about the upright shaft 2, more specifically, spins. The turret 3 includes a die table (die disc) 31, an upper punch retaining portion 32, and a lower punch retaining portion 33. As shown in Fig. 2, the die table 31 has a substantially circular disc shape, and has a plurality of die bores 4 provided in an outer peripheral portion thereof and aligned in a rotation direction (circumferential direction) at predetermined intervals. The die bores 4 each vertically penetrate the die table 31. The die table 31 is alternatively divided into a plurality of plates. Instead of forming the die bores 4 by directly drilling the die table 31, the die table 31 is alternatively provided with a plurality of die members that is separate from the die table 31 and is detachably attached thereto. In this case, each of the die members alternatively has a die bore penetrating vertically.

The die bores 4 are each provided with an upper punch 5 and a lower punch 6 disposed above and below the die bore 4, respectively. The upper punch 5 and the lower punch 6 are retained by the upper punch retaining portion 32 and the lower punch retaining portion 33 so as to be independently slidable vertically with respect to the die bore 4. The upper punches 5 each have a tip 53 that enters and exits corresponding one of the die bores 4. The lower punches 6 each have a tip 63 that is always inserted in corresponding one of the die bores 4. The upper punches 5 and the lower punches 6 horizontally rotate, more specifically revolve, about the upright shaft 2 along with the turret 3 and the die bores 4.

The upright shaft 2 has the lower end to which a worm wheel 7 is attached. The worm wheel 7 meshes with a worm gear 10. The worm gear 10 is fixed to a gear shaft 9 that is driven by a motor 8. Drive power outputted from the motor 8 is transmitted to the gear shaft 9 by way of a belt 11, so as to drive to rotate the upright shaft 2 by way of the worm gear 10 and the worm wheel 7, and further to rotate the turret 3 as well as the punches 5 and 6.

A powdery material as a raw material for compression molded products P such as pharmaceutical tablets is filled in the die bores 4 with use of a feeder X. As to the feeder X, there are several types including an agitated feeder and a gravity feeder. Any type of the feeder X is adoptable in the invention. The powdery material is supplied to the feeder X with use of a powdery material supplier. The powdery material is supplied to the powdery material supplier with use of a hopper 19. The hopper 19 is detachably attached to the molding machine A.

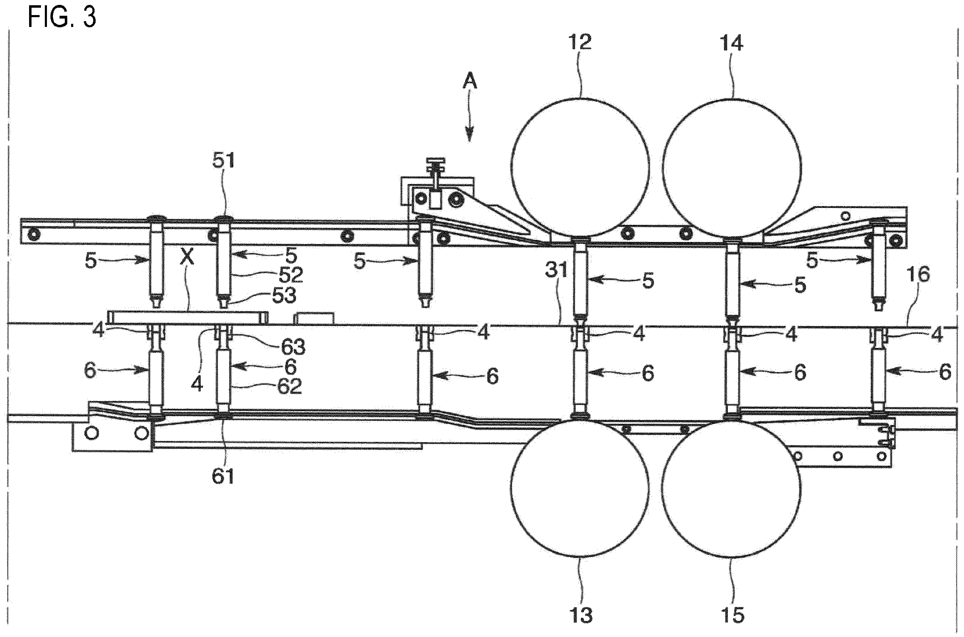

As shown in Figs. 2 and 3, a preliminary compression upper roll 12, a preliminary compression lower roll 13, a main compression upper roll 14, and a main compression lower roll 15 are provided on orbits of the punches 5 and 6 that revolve about the upright shaft 2. The preliminary compression upper roll 12 and the preliminary compression lower roll 13 are paired to vertically sandwich the punches 5 and 6, and the main compression upper roll 14 and the main compression lower roll 15 are paired to vertically sandwich the punches 5 and 6. The preliminary compression upper roll 12 and the preliminary compression lower roll 13, as well as the main compression upper roll 14 and the main compression lower roll 15, respectively bias the upper and lower punches 5 and 6 to bring the upper and lower punches 5 and 6 closer to each other, so that the tips 53 and 63 compress from above and below the powdery material filled in each of the die bores 4.

The upper and lower punches 5 and 6 have heads 51 and 61 pressed by the rolls 12, 13, 14, and 15, and trunks 52 and 62 smaller in diameter than the heads 51 and 61. The upper punch retaining portion 32 of the turret 3 vertically slidably retains the trunks 52 of the upper punches 5, whereas the lower punch retaining portion 33 vertically slidably retains the trunks 62 of the lower punches 6. The tips 53 and 63 of the trunks 52 and 62 are thinner than the remaining portions and are substantially equal in diameter to inner diameter of the die bores 4 so as to be inserted to the die bores 4. The punches 5 and 6 revolve to bring the rolls 12, 13, 14, and 15 closer to the heads 51 and 61 of the punches 5 and 6. The rolls 12, 13, 14, and 15 come into contact with the heads 51 and 61 so as to step thereonto. Furthermore, the rolls 12, 13, 14, and 15 press the upper punches 5 downward and press the lower punches 6 upward. While the rolls 12, 13, 14, and 15 are in contact with flat surfaces of the punches 5 and 6, the punches 5 and 6 keep applying constant pressure to the powdery material in the corresponding die bores 4.

There is a molded product discharge position 16 ahead, in the rotation direction of the turret 3 and the punches 5 and 6, of a position pressed by the main compression upper roll 14 and the main compression lower roll 15. At the molded product discharge position 16, the lower punch 6 ascends to a level where the upper end surface of the tip 63 of the lower punch 6 is substantially as high as the upper end of the die bore 4 and the upper surface of the die table 31 and pushes the molded product P in the die bore 4 out of the die bore 4. The molded product P pushed out of the die bore 4 is collected by the molded product discharge device to be described below.

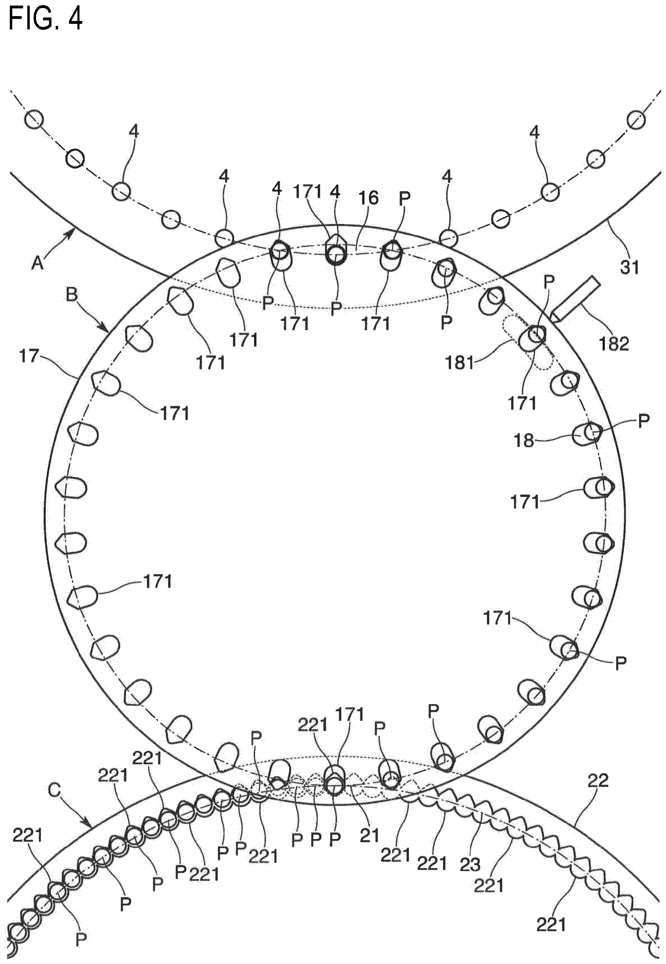

Described in detail below is a molded product discharge device (hereinafter, referred to as the "discharge device") B equipped with the molding machine A. As shown in Figs. 4 to 6, the discharge device B is configured to discharge the product P molded by the molding machine A at the molded product discharge position 16 and convey to a molded product collector 21. The discharge device B includes, as main constituent elements, a rotary member 17 having pocket bores 171 for capturing the molded products P and configured to horizontally rotate in synchronization with the die table 31 of the molding machine A, a support member 18 disposed just below a locus of horizontal rotation of the pocket bores 171 and supporting from below the molded products P captured by the pocket bores 171, and a removal mechanism 182 configured to selectively remove and collect a defective one of the molded products P or one of the molded products P to be sampled halfway in a conveyance route.

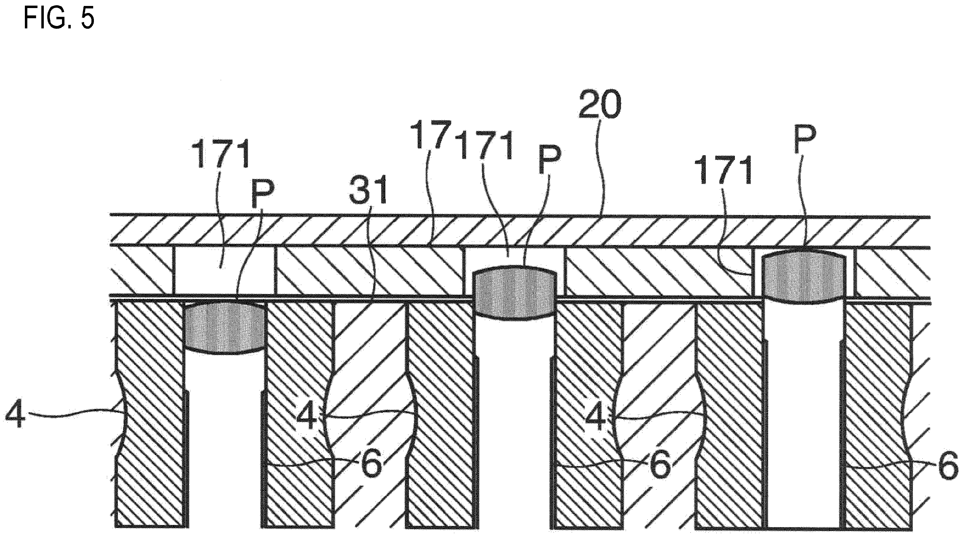

The rotary member 17 has a circular disc shape and is provided, in an outer peripheral edge portion, with the plurality of pocket bores 171 drilled at predetermined intervals in the rotation direction (circumferential direction). As shown in Fig. 5, the pocket bores 171 are opened at least downward, and are opened also upward in the embodiment. In other words, the pocket bores 171 vertically penetrate the rotary member 17. The rotary member 17 is disposed to be partially overlapped from above with the die table 31 of the molding machine A. In the rotary member 17, the lower surface of the portion overlapped with the die table 31 is disposed adjacent to the upper surface of the die table 31. The pocket bores 171 are overlapped in a planar view with the die bores 4 in the die table 31 halfway on a rotation locus thereof.

The pocket bores 171 are long bores extending in the radial direction of the rotary member 17, i.e. bores extend in axial direction, and have a lager dimension in radial direction than in circumferential direction, or in a direction perpendicular to the rotation direction, and having a closed peripheral edge. The pocket bores 171 have an inside dimension in the radial direction, which is larger than the inner diameter of the die bores 4 of the molding machine A as well as is larger than the outer diameter of the molded products P. The pocket bores 171 have an inside dimension in the rotation direction (counterrotational side), which is also slightly larger than the inner diameter of the die bores 4 but is smaller than the inside dimension in the radial direction (radially inward side) of the pocket bores 171. Synchronous rotation of the die table 31 and the rotary member 17 causes the die bores 4 and the pocket bores 171 to temporarily be overlapped with each other at the molded product discharge position 16. In this state, the die bores 4 are displaced in the radial direction of the rotary member 17 relatively to the pocket bores 171. The die bores 4 are overlapped by staying in the pocket bores 171 in a planar view for a longer period due to radial extension of the pocket bores 171.

As described earlier, the lower punches 6 of the molding machine A ascend to push the molded products P out of the die bores 4 at the molded product discharge position 16. The die bore 4 and the pocket bore 171 overlapped therewith vertically face each other in this state. As shown in Fig. 5, the molded products P pressed upward from the die bores 4 to the level of the upper surface of the die table 31 enter the pocket bores 171. The molded products P are each accommodated in a corresponding one of the pocket bores 171. The pocket bores 171 thus accommodate the molded products P one by one in the order of the aligned die bores 4 in the die table 31 of the molding machine A, in other words, keeping the order of compression molding of the molded products P by the molding machine A. As the die table 31 and the rotary member 17 subsequently rotate, the die bores 4 and the pocket bores 171 shift away from each other and the molded products P caught by the pocket bores 171 leave positions just above the die table 31 along with the pocket bores 171 and shift to positions just above the support member 18. The molded product P in each of the pocket bores 171 is supported by the support member 18.

The pocket bores 171 each have a radially outside edge that is located adjacent to the outer peripheral edge of the rotary member 17, is closed, and has a rim in a non-arc shape, specifically, an angled shape, in a planar view. A "non-arc shape" means that the shape is not circular. Furthermore, "an angled shape" includes shapes in which the straight legs having an angle in-between are connected to each other via a small rounding. The molded product P captured by the pocket bore 171 is displaced radially outward from radially inside in the pocket bore 171 by centrifugal force of the rotating rotary member 17. The molded product P, however, comes into contact with the radially outside rim of the pocket bore 171 and further displacement is prevented, so that the molded product P will not jump radially outward from the pocket bore 171. There is provided a slight gap between the molded product P and the radially outside rim of the pocket bore 171 in the state where the molded product P is in contact with the radially outside rim of the pocket bore 171.

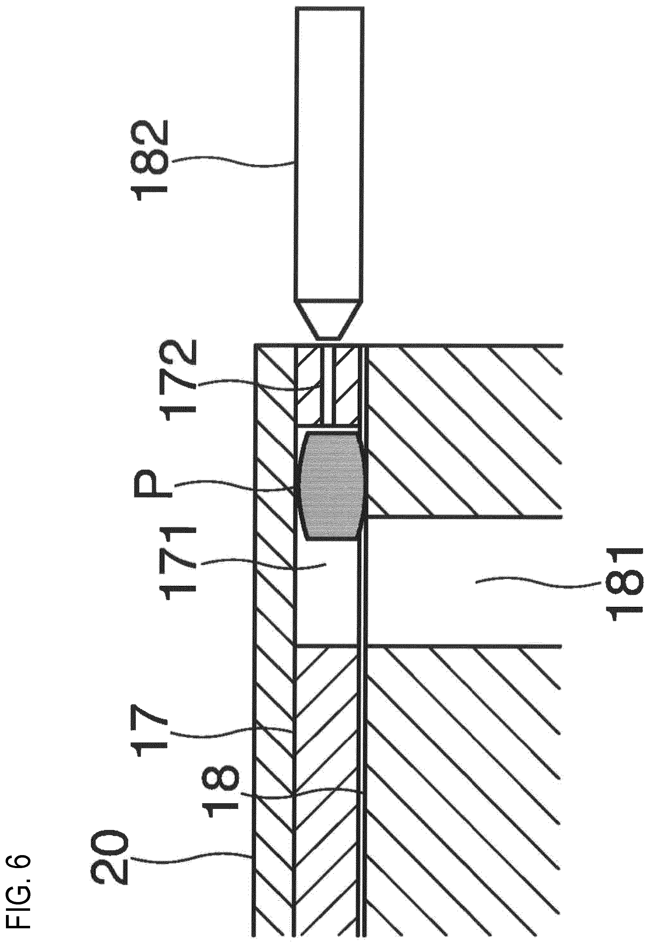

The support member 18 supporting from below the molded products P in the pocket bores 171 is disposed to be overlapped from below with most of the rotary member 17. As shown in Fig. 6, the upper surface of the support member 18 is located adjacent to the lower surface of the rotary member 17. In other words, the support member 18 and the die table 31 of the molding machine A are substantially equal in height level. In order to prevent interference with the die table 31, the support member 18 has a cut-away portion corresponding to the molded product discharge position 16 where the die table 31 and the rotary member 17 are overlapped with each other in a planar view. The cut-away portion of the support member 18 has an end edge adjacent to the outer peripheral edge of the die table 31 so as to reliably support the molded product P and prevent drop from the pocket bore 171 when the pocket bore 171 capturing the molded product P leaves the position just above the die table 31.

The rotary member 17 is provided, just thereabove, with a cover 20 closing from above the pocket bores 171. The cover 20 thus provided inhibits the molded products P captured by the pocket bores 171 from unexpectedly jumping to be ejected from the pocket bores 171. The cover 20 may be fixed to the rotary member 17 or be provided integrally with the rotary member 17, or may not be fixed to the rotary member 17. The cover 20 having the former configuration rotates integrally with the rotary member 17 whereas the cover 20 having the latter configuration does not necessarily rotate when the rotary member 17 rotates.

In line with the above specification, the pocket bores 171 may be provided a through holes in the rotary member 17 being drilled from one axial end side of the rotary member 17 to the other axial end side of the rotary member 17 in the axial direction of the rotary member 17, in case the cover 20 is provided as a separate member and is provided on an axial end side of the rotary member 17.

However, the pocket bores 171 may be formed as pockets, i.e. recesses, which are not entirely drilled through the rotary member in case the rotary member is formed as an integral member which includes both the "rotary member 17" and the "cover 20".

The shape of the pocket bores when viewed in axial direction of the rotary member 17 may have a tapered shape such that the circumferential dimension thereof decreases towards the radially outer side.

The molded product collector 21 according to the embodiment is provided symmetrically with the molded product discharge position 16 about the center of rotation of the rotary member 17, at a destination of transfer of the molded products P. The molded products P captured by the pocket bores 171 in the rotary member 17 at the molded product discharge position 16 are typically conveyed to the molded product collector 21. There is, however, a demand for removal or collection of a specific one of the molded products P such as a defective product or a sampled product by selecting from among the molded products P to be transferred to the molded product collector 21.

In view of this, the support member 18 is provided with a drop port 181 for dropping a specific one of the molded products P halfway on the rotation locus of the pocket bores 171 from the molded product discharge position 16 to the molded product collector 21. The drop port 181 is overlapped in a planar view with the pocket bore 171 at a portion displaced radially inward from the radially outside edge but is not overlapped with the radially outside edge of the pocket bore 171.

The removal mechanism 182 is configured to drop the molded product P into the drop port 181 by causing radially inward displacement of the molded product P from radially outside in the pocket bore 171. The removal mechanism 182 according to the embodiment mainly includes an air jet nozzle configured to blow air having pressure higher than the atmospheric pressure into the gap between the molded product P in the pocket bore 171 and the radially outside rim of the pocket bore 171. As shown in Fig. 6, the rotary member 17 is preliminarily provided with an air injection port 172 opened in an outer peripheral surface of the rotary member 17 for communication between the outside of the rotary member 17 and the inside of the pocket bores 171 (the radially outside edges of the pocket bores 171). The air injection port 172 has an inner diameter obviously smaller than the inner diameter of the die bores 4 or the outer diameter of the molded products P. The air jet nozzle 182 faces the outer peripheral surface of the rotary member 17 and is disposed at a position on a straight line connecting the center of rotation of the rotary member 17 and the drop port 181.

When the pocket bore 171 capturing the specific one of the molded products P to be removed or collected passes by the air jet nozzle 182, jetting air having positive pressure from the air jet nozzle 182 causes the air to blow into the gap between the molded product P in the pocket bore 171 and the radially outside rim of the pocket bore 171 through the air injection port 172, and the molded product P is displaced radially inward from the radially outside in the pocket bore 171 by the pressure of the air. The molded product P thus drops into the drop port 181 opened in the support member 18. The molded product P dropped into the drop port 181 cannot reach the molded product collector 21.

In contrast, in the pocket bores 171 receiving no air, the molded products P receiving centrifugal force are located radially outside in the pocket bores 171. (Even if slightly touching the drop ports 181,) the molded products P mostly or entirely do not pass just above the drop port 181 and will not drop into the drop port 181. The molded products P not dropped into the drop port 181 shortly reach the molded product collector 21.

The molding machine A according to the embodiment includes a control unit (not shown) configured to detect, with use of various detectors, amounts of the powdery material filled in the die bores 4, pressure applied by the punches 5 and 6 to the powdery material filled in the die bores 4, and the like, and independently determine whether or not the molded products P molded in the die bores 4 have defectiveness. Determination can be made in accordance with a conventional determination method for the molding machine A and will not be specifically described herein.

In order to remove the molded product P determined as defective, the control unit opens or closes a valve (not shown; this valve is occasionally incorporated in the air jet nozzle 182) configured to control an air flow so as to cause the air jet nozzle 182 to jet air at timing when the pocket bore 171 capturing the defective molded product P passes by the air jet nozzle 182.

As will be described later, the support member 18 has a cut-away portion corresponding to the molded product collector 21. Accordingly, the pocket bore 171 in the rotary member 17 and the support member 18 are not overlapped with each other in a planar view at the molded product collector 21. The molded product P captured by the pocket bore 171 in the rotary member 17 and transferred to the molded product collector 21 thus eventually loses support from below by the support member 18 and drops out of the pocket bore 171.

As shown in Fig. 4, the molded product collector 21 is optionally provided with a molded product collection device (hereinafter, referred to as the "collection device") C separately from the molded product discharge device B. The collection device C includes a rotary member 22 having collecting bores 221 for capturing the molded products P and configured to horizontally rotate in synchronization with the die table 31 of the molding machine A and the rotary member 17 of the discharge device B, and a support member 23 disposed just below a locus of the horizontally rotating collecting bores 221 and supporting from below the molded products P captured by the collecting bores 221.

The rotary member 22 has a circular disc shape and is provided, in an outer peripheral edge portion, with the plurality of collecting bores 221 drilled at predetermined intervals in a rotation direction (circumferential direction). The collecting bores 221 are opened at least upward, and are opened also downward in the embodiment. In other words, the collecting bores 221 vertically penetrate the rotary member 22. The rotary member 22 of the collection device C is disposed to be partially overlapped from below with the rotary member 17 of the discharge device B. In the rotary member 22, the upper surface of the portion overlapped with the rotary member 17 is disposed adjacent to the lower surface of the rotary member 17 of the discharge device B. The collecting bores 221 are overlapped in a planar view with the radially outside edges of the pocket bores 171 in the rotary member 17 of the discharge device B halfway on a rotation locus thereof.

The collecting bores 221 slightly extend in the radial direction of the rotary member 22, or in a direction perpendicular to the rotation direction, and each have a closed peripheral edge. The collecting bores 221 have an inside dimension in the radial direction, which is larger than the inner diameter of the die bores 4 of the molding machine A but is smaller than the inside dimension in the radial direction of the pocket bores 171. The collecting bores 221 have an inside dimension in the rotation direction, i.e. a width of the collecting bores 221 in the rotation direction, which is also slightly larger than the inner diameter of the die bores 4 but is smaller than the inside dimension in the radial direction of the collecting bores 221, i.e. a length of the collecting bores 221 in the radial direction,. Synchronous rotation of the rotary member 17 and the rotary member 22 causes the pocket bores 171 and the collecting bores 221 to temporarily be overlapped with each other at the molded product collector 21. In this state, the collecting bores 221 are displaced in the radial direction of the rotary member 17 relatively to the pocket bores 171. The collecting bores 221 are overlapped by staying in the pocket bores 171 in a planar view for a longer period due to radial extension of the pocket bores 171.

As described earlier, the support member 18 is not provided at the molded product collector 21, so that the molded products P reaching the molded product collector 21 drop out of the pocket bores 171. The pocket bore 171 and the collecting bore 221 overlapped therewith vertically face each other in this state, and the molded products P dropped out of the pocket bores 171 are caught in the collecting bores 221. The molded products P are each accommodated in a corresponding one of the collecting bores 221. The collecting bores 221 thus accommodate the molded products P one by one in the order of the aligned pocket bores 171 of the discharge device B, in other words, keeping the order of discharge of the molded products P from the molding machine A by the discharge device B. As the rotary member 17 and the rotary member 22 subsequently rotate, the pocket bores 171 and the collecting bores 221 shift away from each other and the molded products P dropped into the collecting bores 221, which are supported from below by the support member 23 of the collection device C, rotate along with the rotary member 22 and the collecting bores 221.

The plurality of collecting bores 221 is aligned in the rotation direction in the rotary member 22 of the collection device C at intervals smaller than intervals of the plurality pocket bores 171 aligned in the rotation direction in the rotary member 17 of the discharge device B. The rotary member 22 of the collection device C thus rotates at a rotational speed (angular speed) slower than a rotational speed of the rotary member 17 of the discharge device B. As exemplarily shown in the figure, the collecting bores 221 adjacent to each other in the rotary member 22 are joined to communicate with each other.

The collecting bores 221 each have a radially outside edge that is located adjacent to the outer peripheral edge of the rotary member 22, is closed, and has a rim in a non-arc shape, specifically, an angled shape, in a planar view. Just as for the pocket bores 171, a "non-arc shape" means that the shape is not circular. Furthermore, "an angled shape" includes shapes in which the legs having an angle in-between are connected to each other via a small rounding.

The molded product P captured by the collecting bore 221 is displaced radially outward from radially inside in the collecting bore 221 by centrifugal force of the rotating rotary member 22. The molded product P, however, comes into contact with the radially outside rim of the collecting bore 221 and further displacement is prevented, so that the molded product P will not jump radially outward from the collecting bore 221.

In the collection device C, the support member 23 supporting from below the molded products P in the collecting bores 221 is disposed to be overlapped from below with most of the rotary member 22. The upper surface of the support member 23 is located adjacent to the lower surface of the rotary member 22.

The rotary member 22 of the collection device C and the support member 18 of the discharge device B are substantially equal in height level. In order to prevent interference between the rotary member 22 (furthermore, the support member 23) of the collection device C and the support member 18 of the discharge device B, the support member 18 has a cut-away portion corresponding to the molded product collector 21 where the rotary member 17 of the discharge device B and the rotary member 22 of the collection device C are overlapped with each other in a planar view. The cut-away portion of the support member 18 of the discharge device B has an end edge adjacent to the outer peripheral edge of the rotary member 22 of the collection device C. At the molded product collector 21, the pocket bores 171 in the rotary member 17 of the discharge device B are not positioned just above the support member 18. Immediately thereafter, the pocket bores 171 shift to the position just above the rotary member 22 of the collection device C. The molded products P in the pocket bores 171 are reliably supported by the rotary member 22 of the collection device C and will not drop at any position other than the collecting bores 221.

The embodiment provides the molded product discharge device B equipped with the rotary compression molding machine A that includes the die table 31 provided with the vertically penetrating die bore 4, and the upper punch 5 and the lower punch 6 vertically slidably retained above and below the die bore 4, and is configured to horizontally rotate the die table 31 and the punches 5 and 6 and mold the molded product P by compressing the powdery material filled in the die bore 4 with use of the upper punch 5 and the lower punch 6. The molded product discharge device B includes the rotary member 17 configured to be horizontally rotatable and disposed to be partially overlapped from above with the die table 31, the pocket bore 171 provided in the rotary member 17, extending in the radial direction of the rotary member 17 to be larger than the inner diameter of the die bore 4, and having the closed radially outside edge, for receiving and capturing the molded product P pushed upward from the die bore 4 by the lower punch 6 when the pocket bore 171 passes just above the die table 31, and the support member 18 disposed just below the locus of horizontal rotation of the pocket bore 171 and supporting from below the molded product P captured by the pocket bore 171.

The embodiment provides the discharge device B that does not require any guide facing the outer peripheral edge of the rotary member configured to catch and convey the molded product P as in the conventional discharge device B. The discharge device B according to the embodiment thus achieves a simple configuration, easy maintenance, and reduction in cost therefor. The rotary member 17 is configured to discharge the plurality of molded products P from the molding machine A one by one in the order of the aligned die bores 4 in the molding machine A, or in the order of molding of the molded products P, and align the molded products P to be accommodated in the pocket bores 171 by keeping the order.

The molded product discharge device B further includes the drop port 181 opened, in the support member 18, to be overlapped with the portion of the pocket bore 171 displaced radially inward from the radially outside edge, and the removal mechanism 182 configured to drop the molded product P into the drop port 181 by causing the molded product P to be displaced radially inward from radially outside in the pocket bore 171. Accordingly, only the required molded product P is selectively dropped into the drop port 181 to be excluded or extracted for the purpose of removal of a defective product, sampling, or the like.

The removal mechanism 182 is configured to blow air from the radial outside of the rotary member 17 into the pocket bore 171 and is thus easily mounted to the discharge device B.

The pocket bore 171 is closed from above by the cover 20. Accordingly, the molded product P is reliably prevented from jumping to be ejected from the pocket bore 171 during conveyance.

The molded product discharge device B further includes the molded product collector 21 opened, at the destination of transfer by the rotary member 17 of the molded product P captured by the pocket bore 171, to be overlapped with the radially outside portion in the pocket bore 171 as the portion not provided with the support member 18, and the molded product P reaching the destination drops from the pocket bore 171 to the molded product collector 21. Accordingly, the molded product P transferred by the rotary member 17 while being captured by the pocket bore 171 is appropriately collected by the molded product collector 21.

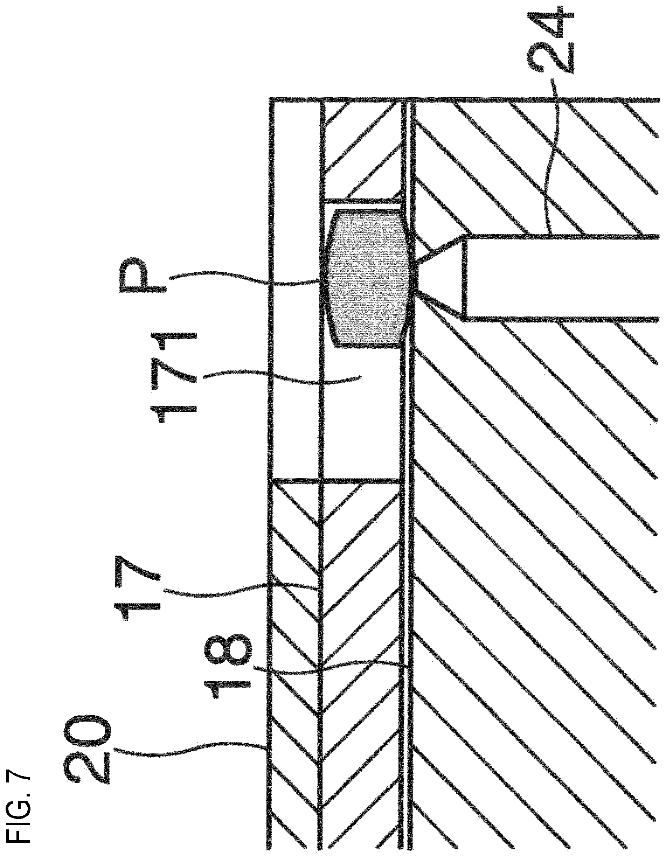

The invention is not limited to the embodiment detailed above. According to the above embodiment, air is blown radially inward from radially outside into the pocket bore 171 in the rotary member 17 of the discharge device B, so as to displace the molded product P in the pocket bore 171 radially inward and drop the molded product into the drop port 181. An aspect of the removal mechanism, which is configured to selectively remove a specific one of the molded products P, is not limited to the embodiment. As exemplified in Fig. 7, the support member 18 is provided with an air jet nozzle 24 as a removal mechanism configured to jet air from below to above the pocket bore 171 halfway on the rotation locus of the pocket bore 171 from the molded product discharge position 16 to the molded product collector 21, and the cover 20 is cut away or removed at a portion above the air jet nozzle 24, so as to allow the pocket bore 171 to be opened upward at the cut-away or removed portion. The cover 20 is neither fixed to nor provided integrally with the rotary member 17, but stays still without horizontally rotating along with the rotary member 17. The air jet nozzle 24 jets air at timing when the pocket bore 171 capturing the molded product P to be removed passes just above the air jet nozzle, so that the target molded product P is blown upward from the pocket bore 171. The molded product P thus blown off cannot reach the molded product collector 21.

The air jet nozzle 24 may be replaced with a driving member (not shown) configured to shift forward and backward between positions below and above the lower surface of the rotary member 17. In this case, at timing when the pocket bore 171 capturing the molded product P to be removed passes just above the driving member, the driving member will ascend to push upward from below the molded product P in the pocket bore 171 and blow the molded product P out of the pocket bore 171.

The radially outside rim of the pocket bore 171 in the rotary member 17 may not be closed completely but has only to be narrowed so as not to be opened larger than the outer diameter of the molded product P. In other words, the radially outside edge of the pocket bore 171 can have a gap narrower than the outer diameter of the molded product P. The air injection port 172 according to the above embodiment can be regarded as a type of the gap.

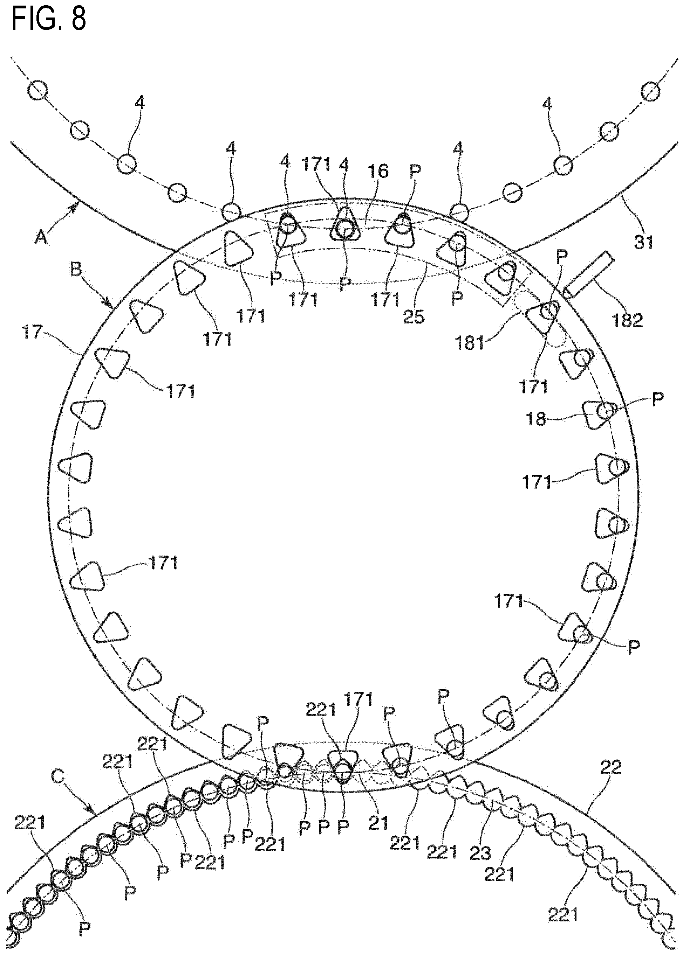

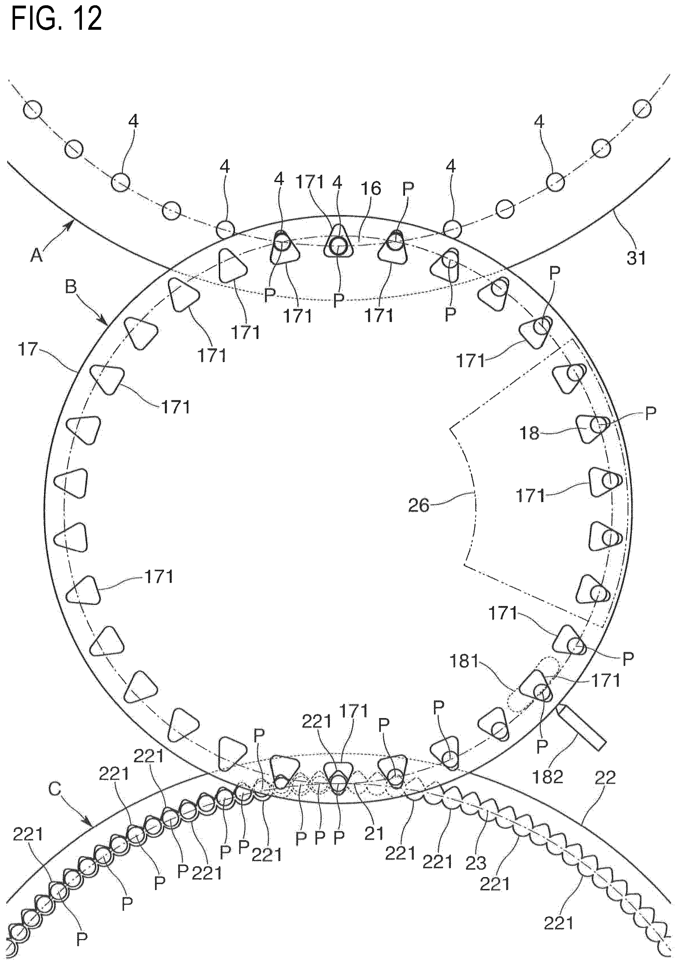

As shown in Fig. 8 or 12, the pocket bores 171 opened in the rotary member 17 of the discharge device B alternatively have a substantially triangular shape in a planar view. More specifically, the pocket bores 171 exemplified in the figures have a substantially isosceles triangular peripheral edge having one of vertexes positioned to face the outer peripheral edge of the rotary member 17 and gradually expanding inside dimension in the rotation direction of the rotary member 17 inward in the radial direction of the rotary member 17. The pocket bores 171 have the inside dimension in the radial direction, which is larger than the inner diameter of the die bores 4 of the molding machine A as well as is larger than the outer diameter of the molded products P. The pocket bores 171 have the inside dimension in the rotation direction, which increases to be larger than the inner diameter of the die bores 4 except the vertex closest to the outer peripheral edge of the rotary member 17, but is smaller than the inside dimension in the radial direction of the pocket bores 171. The pocket bores 171 have peripheral corners, or the vertexes of the triangular shape, which are roundly chamfered. The pocket bores 171 in such a shape are easily formed in the rotary member 17. The peripheral edges of the pocket bores 171 are obviously not limited in shape to those exemplified in Figs. 4, 8, and 12, and may have a different shape.

As shown in Figs. 8 to 11, the rotary member 17 is optionally provided with a dust collecting duct 25 configured to suck a powdery material and other dust having entered the pocket bores 171 in the rotary member 17 to remove the powdery material and the dust from the pocket bores 171. The dust collecting duct 25 exemplified in the figures is located above the outer peripheral edge portion of the rotary member 17 provided with the pocket bores 171, and is opened downward. This dust collecting duct 25 is connected to a dust collector (not shown) configured to generate negative pressure to suck and collect dust, and is configured to suck dust remaining in the pocket bores 171 and guide the dust to the duct collector. The dust collecting duct 25 expands in a certain fan-shape range in the rotation direction of the rotary member 17 at least from the molded product discharge position 16 where the die bores 4 in the die table 31 of the molding machine A and the pocket bores 171 in the rotary member 17 of the discharge device B are overlapped with each other, is located adjacent to the locus of horizontal rotation of the pocket bores 171, and is configured to suck dust in the pocket bores 171 within the range.

However, the cover 20 closing from above the pocket bores 171 is provided between the rotary member 17 and the dust collecting duct 25. The cover 20 thus needs to preliminarily be provided with communicating bores 201 and 202 allowing communication between the interior of the pocket bores 171 and a space above the cover 20.

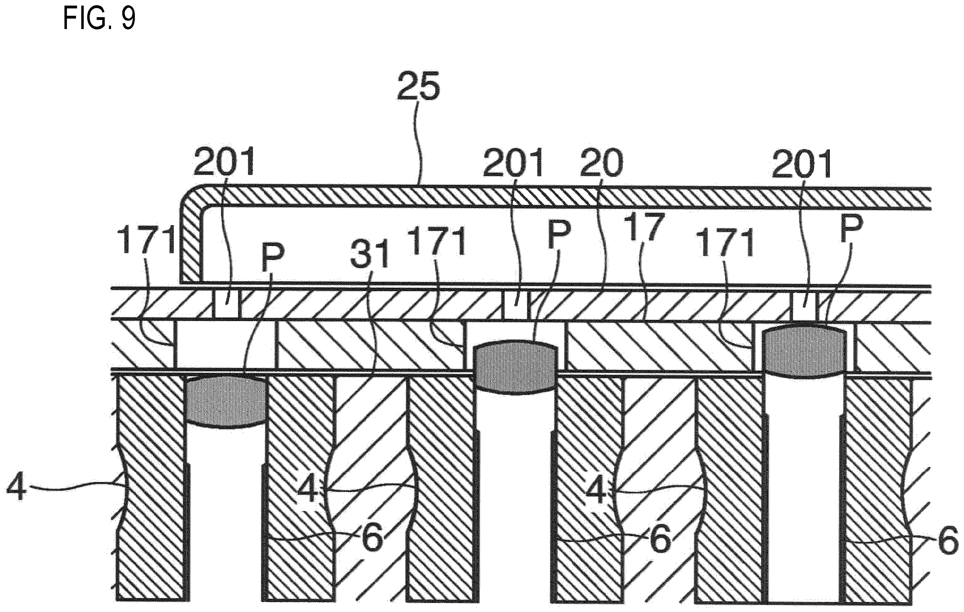

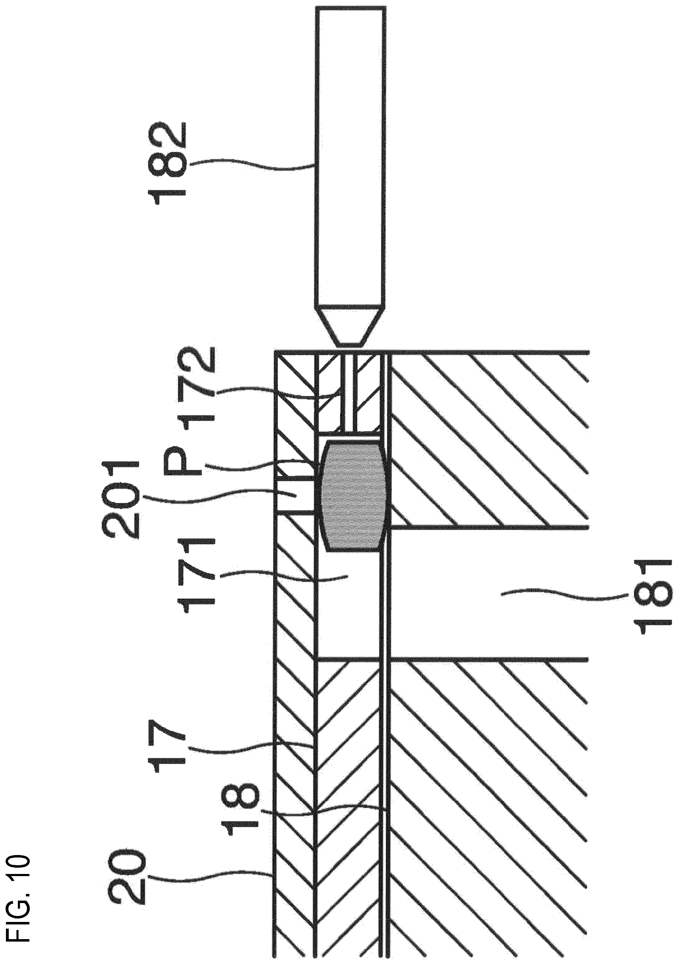

In a case where the cover 20 is fixed to or is provided integrally with the rotary member 17 and rotates integrally with the rotary member 17, as shown in Figs. 9 and 10, the cover 20 is provided, just above the pocket bores 171, with the small bores 201 vertically penetrating the cover 20. The small bores 201 are sized to have an inner diameter smaller than the outer diameter of the molded products P so as to prevent the molded products P captured in the pocket bores 171 from jumping outward from the rotary member 17 through the small bores 201. The small bores 201 are desirably sized to be smaller than the thickness of the molded products P (a distance between the tip 53 of the upper punch 5 and the tip 63 of the lower punch 6 in compression molding the molded product P).

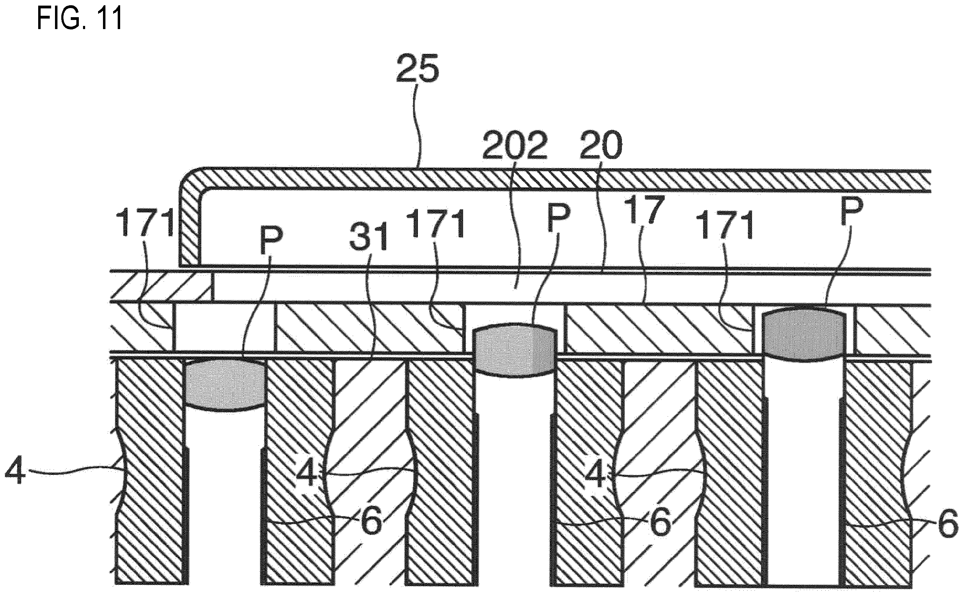

In another case where the cover 20 is not fixed to the rotary member 17 and does not rotate with the rotary member 17, as shown in Fig. 11, the groove bores 202 are provided just above the locus of horizontal rotation of the pocket bores 171, vertically penetrate the cover 20, and have a partial arc shape extending in the rotation direction of the rotary member 17 in a planar view. The groove bores 202 are sized to have a width in the radial direction of the rotary member 17 smaller than the outer diameter of the molded products P so as to prevent the molded products P captured in the pocket bores 171 from jumping outward from the rotary member 17 through the groove bores 202. The groove bores 202 are desirably sized to be smaller than the thickness of the molded products P.

For a while immediately after the molding machine A starts operating, a powdery material is not always compressed sufficiently and the molded products P may fail to have desired hardness and outer shapes. This indicates that some powdery material is not compressed sufficiently in the die bores 4 and may enter the pocket bores 171 of the discharge device B as unneeded dust. Provision of the dust collecting duct 25 described above causes dust in the pocket bores 171 to be sucked and removed, so as to prevent the dust from entering a gap between the rotary member 17 and the die table 31, a gap between the rotary member 17 and the support member 18, or a gap between the rotary member 17 and the rotary member 22. Dust is thus prevented from disturbing rotation of the die table 31, the rotary member 17, or the rotary member 22. In this case, synchronization in rotation among the die table 31, the rotary member 17, and the rotary member 22 will not be affected (out of phase in rotation).

The dust collecting duct 25 effectively functions also to remove dust adhering to surfaces of the completed molded products P.

As shown in Fig. 12, the discharge device B is optionally provided, on the conveyance route from the molded product discharge position 16 to the molded product collector 21, with a device 26 such as an analytical device configured to analyze the molded product P captured by the pocket bore 171, an inspection device configured to inspect quality of the molded product P, or a processing device configured to apply some post-processing to the molded product P.

Specific examples of the analytical device or inspection device 26 include a device configured to determine good or bad quality of the molded product P by imaging the molded product P with a camera sensor and analyzing an obtained image thereof, a device configured to determine good or bad quality of the molded product P by measuring weight of the molded product P, a device configured to determine good or bad quality of the molded product P by analyzing components of the molded product P in accordance with Raman spectroscopy, near infrared reflectance (NIR, or an infrared absorption spectrum method), X-ray diffraction, X-ray transmission measurement, high performance liquid chromatography (HPLC), or the like, and a metal detector configured to detect contamination of the molded product P by a metal piece.

Examples of the processing device 26 include a laser beam machine configured to irradiate the molded product P with a laser beam to carve a surface thereof or apply laser marking to the surface, and an ink jet printer configured to print on the surface of the molded product P. Laser carving, laser marking, or printing may be applied only to a good one of the molded products P or a defective one of the molded products P.

As shown in Fig. 12, the discharge device B is optionally provided, downstream of the device 26 and upstream of the molded product collector 21, with the drop port 181 and the removal mechanism 182 configured to selectively remove and collect a defective one of the molded products P or one of the molded products P to be sampled halfway in the conveyance route.

A molded product discharge device (B) includes a rotary member (17) configured to be horizontally rotatable and disposed to be partially overlapped from above with a die table (31) having a die bore (4) of a rotary compression molding machine (A), a pocket bore (171) provided in the rotary member (17), being a long hole which extends in a radial direction of the rotary member (17), having a larger inner diameter than an inner diameter of the die bore (4), and having a radially outside edge which is closed or narrowed with an opening and which is smaller than an outer diameter of the molded product (P), for receiving and capturing the molded product (P) pushed upward from the die bore (4) by the lower punch (6) when the pocket bore (171) passes just above the die table (31), and a support member (18) supporting from below the molded product (P) captured by the pocket bore (171).

## Claims

1. A molded product discharge device (B) equipped with a rotary compression molding machine (A) that includes a die table (31) provided with a vertically penetrating die bore (4), and an upper punch (5) and a lower punch (6) vertically slidably retained above and below the die bore (4), and is configured to horizontally rotate the die table (31) and the punches (5 and 6) and mold a molded product (P) by compressing a powdery material filled in the die bore (4) with use of the upper punch (5) and the lower punch (6),
the molded product discharge device (B) comprising:
a rotary member (17) configured to be horizontally rotatable and disposed to be partially overlapped from above with the die table (31);
**characterized by**
a pocket bore (171) provided in the rotary member (17), being a long hole which extends in a radial direction of the rotary member (17), having a larger inner diameter than an inner diameter of the die bore (4), and having a radially outside edge which is closed or narrowed with an opening and which is smaller than an outer diameter of the molded product, for receiving and capturing the molded product (P) pushed upward from the die bore (4) by the lower punch (6) when the pocket bore (171) passes just above the die table (31); and
a support member (18) disposed just below a locus of horizontal rotation of the pocket bore (171) and supporting from below the molded product (P) captured by the pocket bore (171).

2. The molded product discharge device (B) according to claim 1, further comprising:
a drop port (181) opened, in the support member (18), to be overlapped with a portion of the pocket bore (171) displaced radially inward from the radially outside edge, and
a removal mechanism (182) configured to drop the molded product (P) into the drop port (181) by causing the molded product (P) to be displaced radially inward from radially outside in the pocket bore (171).

3. The molded product discharge device (B) according to claim 2, wherein the removal mechanism (182) is configured to blow air into the pocket bore (171).

4. The molded product discharge device (B) according to any one of claims 1 to 3, wherein the pocket bore (171) is closed from above.

5. The molded product discharge device (B) according to any one of claims 1 to 4, further comprising:
a molded product collector (21) opened, at a destination of transfer by the rotary member (17) of the molded product (P) captured by the pocket bore (171), to be overlapped with a radially outside portion in the pocket bore (171) as a portion not provided with the support member (18), wherein
the molded product (P) reaching the destination drops from the pocket bore (171) to the molded product collector (21).

6. The molded product discharge device (B) according to any one of claims 1 to 5, further comprising a dust collecting duct (25) configured to suck dust having entered the pocket bore (171) to remove the dust from the pocket bore (171).

## Patentansprüche

1. Formprodukt-Austragsvorrichtung (B), die mit einer Rotationsdruckformmaschine (A) ausgestattet ist, die einen Matrizentisch (31), der mit einer vertikal durchdringenden Matrizenbohrung (4) versehen ist, und einen oberen Stempel (5) und einen unteren Stempel (6) aufweist, die vertikal verschiebbar über und unter der Matrizenbohrung (4) gehalten werden, und die konfiguriert ist, um den Matrizentisch (31) und die Stempel (5 und 6) horizontal zu drehen und ein Formprodukt (P) durch Pressen eines in die Matrizenbohrung (4) gefüllten pulverförmigen Materials unter Verwendung des oberen Stempels (5) und des unteren Stempels (6) herzustellen,
wobei die Formprodukt-Austragsvorrichtung (B) umfasst:
ein Rotationselement (17), das horizontal drehbar und teilweise von oben mit dem Matrizentisch (31) überlappend angeordnet ist;
**gekennzeichnet durch**
eine im Rotationselement (17) vorgesehene Taschenbohrung (171), die ein Langloch ist, das sich in radialer Richtung des Rotationselements (17) erstreckt, einen größeren Innendurchmesser als ein Innendurchmesser der Matrizenbohrung (4) aufweist und eine radial äußere Kante aufweist, die mit einer Öffnung geschlossen oder verengt ist und kleiner als ein Außendurchmesser des Formproduktes ist, zur Aufnahme und zum Auffangen des Formproduktes (P), das durch den unteren Stempel (6) aus der Matrizenbohrung (4) nach oben gedrückt wird, wenn die Taschenbohrung (171) knapp über dem Matrizentisch (31) verläuft; und
ein Stützelement (18), das knapp unter einem Ort der horizontalen Drehung der Taschenbohrung (171) angeordnet ist und das das von der Taschenbohrung (171) aufgenommene Formprodukt (P) von unten aufnimmt.

2. Die Formprodukt-Austragsvorrichtung (B) nach Anspruch 1, ferner umfassend:
eine Fallöffnung (181), die in dem Stützelement (18) geöffnet ist, um mit einem Abschnitt der Taschenbohrung (171) überlappt zu werden, der radial nach innen von der radial äußeren Kante verschoben ist, und
einen Entnahmemechanismus (182), der konfiguriert ist, um das Formprodukt (P) in die Fallöffnung (181) fallen zu lassen, indem er bewirkt, dass das Formprodukt (P) von radial außen in der Taschenbohrung (171) radial nach innen verschoben wird.

3. Die Formprodukt-Austragsvorrichtung (B) nach Anspruch 2, wobei der Entnahmemechanismus (182) konfiguriert ist, um Luft in die Taschenbohrung (171) einzublasen.

4. Die Formprodukt-Austragsvorrichtung (B) nach einem der Ansprüche 1 bis 3, wobei die Taschenbohrung (171) von oben geschlossen ist.

5. Die Formprodukt-Austragsvorrichtung (B) nach einem der Ansprüche 1 bis 4, ferner umfassend:
einen Formprodukt-Sammler (21), der an einem Ort der Übertragung durch das Rotationselement (17) des Formprodukts (P), das von der Taschenbohrung (171) erfasst wird, geöffnet ist, um mit einem radial äußeren Abschnitt in der Taschenbohrung (171) als einem Abschnitt, der nicht mit dem Stützelement (18) versehen ist, überlappt zu werden, wobei
das Formprodukt (P), das das Bestimmungsziel erreicht, von der Taschenbohrung (171) zum Formprodukt-Sammler (21) herabfällt.

6. Die Formprodukt-Austragsvorrichtung (B) nach einem der Ansprüche 1 bis 5, ferner umfassend einen Staubsammelkanal (25), der konfiguriert ist, um Staub abzusaugen, der in die Taschenbohrung (171) eingedrungen ist, um den Staub aus der Taschenbohrung (171) zu entfernen.

## Revendications

1. Dispositif de déchargement de produit moulé (B) équipé d'une machine de moulage par compression rotative (A) qui comprend une table de matrice (31), pourvue d'un alésage de matrice pénétrant verticalement (4), et d'un poinçon supérieur (5) et d'un poinçon inférieur (6) retenus verticalement de manière coulissante au-dessus et au-dessous de l'alésage de matrice (4), et est configurée pour entraîner en rotation la table de matrice (31) et les poinçons (5 et 6) et mouler un produit moulé (P) par compression d'un matériau en poudre rempli dans l'alésage de matrice (4) à l'aide du poinçon supérieur (5) et du poinçon inférieur (6),
le dispositif de déchargement de produit moulé (B) comprenant :
un élément rotatif (17) configuré pour pouvoir être entraîné horizontalement en rotation et disposé de façon à être en partie chevauché à partir du dessus par la table de matrice (31) ;
**caractérisé par**
un alésage borgne (171) fourni dans l'élément rotatif (17), constituant un trou long qui s'étend suivant la direction radiale de l'élément rotatif (17), ayant un diamètre interne supérieur à un diamètre interne de l'alésage de matrice (4) et ayant un bord radialement extérieur qui est fermé ou rétréci avec une ouverture et qui est inférieur à un diamètre externe du produit moulé, pour recevoir et capturer le produit moulé (P) poussé vers le haut à partir de l'alésage de matrice (4) par le poinçon inférieur (6) lorsque l'alésage borgne (171) passe juste au-dessus de la table de matrice (31) ; et
un élément de support (18) disposé juste au-dessous d'un point de rotation horizontale de l'alésage borgne (171) et supportant à partir du dessous le produit moulé (P) capturé par l'alésage borgne (171).

2. Dispositif de déchargement de produit moulé (B) selon la revendication 1, comprenant en outre :
un port de chute (181) ouvert, dans l'élément de support (18), pour être chevauché par une partie de l'alésage borgne (171) déplacé radialement vers l'intérieur à partir d'un bord radialement extérieur, et
un mécanisme de retrait (182) configuré pour lâcher le produit moulé (P) dans le port de chute (181) en entraînant le produit moulé (P) à se déplacer radialement vers l'intérieur à partir de sa position radialement extérieure dans l'alésage borgne (171).

3. Dispositif de déchargement de produit moulé (B) selon la revendication 2, dans lequel le mécanisme de retrait (182) est configuré pour souffler de l'air à l'intérieur de l'alésage borgne (171).

4. Dispositif de déchargement de produit moulé (B) selon l'une quelconque des revendications 1 à 3, dans lequel l'alésage borgne (171) est fermé sur le dessus.

5. Dispositif de déchargement de produit moulé (B) selon l'une quelconque des revendications 1 à 4, comprenant en outre :
un collecteur de produit moulé (21) ouvert, à une destination de transfert par l'élément rotatif (17) du produit moulé (P) capturé par l'alésage borgne (171), destiné à être chevauché par une partie radialement extérieure dans l'alésage borgne (171) en tant que partie non pourvue de l'élément de support (18), dans lequel
le produit moulé (P) atteignant la destination tombe de l'alésage borgne (171) au collecteur de produit moulé (21).

6. Dispositif de déchargement de produit moulé (B) selon l'une quelconque des revendications 1 à 5, comprenant en outre un conduit de collecte de poussière (25) configuré pour aspirer la poussière qui s'est introduite dans l'alésage borgne (171) pour retirer la poussière de l'alésage borgne (171) .
